# EUROPEAN PATENT APPLICATION

(11) **EP 4 807 403 A1**
(43) Date of publication of application: **16.09.2026**
(21) Application number: 26163901.7
(22) Date of filing: 11.03.2026
(51) Int. Cl.: G01V 1/36, G01V 1/38

(54) **SYSTEMS AND METHODS FOR DIRECT ARRIVAL ESTIMATION FOR MARINE SEISMIC DATA**

(30) Priority: 11.03.2025 US 202563770101 P
(71) Applicant: Services Pétroliers Schlumberger, 75007 Paris (FR); GeoQuest Systems B.V., 2514 JG The Hague (NL)
(72) Inventor: BAI, Tong, Houston, 77077 (US); BOIERO, Daniele, Houston, 77077 (US)
(74) Representative: Schlumberger Intellectual Property Department

(57) **Abstract**

Systems and methods for direct arrival estimation for marine seismic data are provided. A computer-implemented method for estimating direct-arrival energy in seismic data acquired in a marine environment, the method including: executing, by one or more processors, operations on seismic data that contain up-going and down-going wavefields in which direct-arrival information is not properly or completely recorded, processing the seismic data using a computer-based wavefield-analysis technique to identify water-layer reverberation events within the up-going and down-going wavefields, leveraging, through computer-implemented analysis, stable relationships among water-layer reverberations, computing, by the processors, an estimated direct-arrival signal based on the identified relationships to compensate for missing or improperly recorded direct-arrival information, and producing, using the processors, a direct-arrival estimate configured for use in subsequent seismic-processing operations.

## Description

### CROSS-REFERENCE TO RELATED APPLICATION(S)

This application claims the benefit of and priority to U.S. Provisional Patent Application No. 63/770,101, filed on March 11, 2025, the entirety of which is incorporated by reference herein for all purposes.

### TECHNICAL FIELD

This disclosure generally relates to systems and methods for direct arrival estimation for marine seismic data.

### BACKGROUND

In marine seismic acquisition, seismic energy emitted, for example, by airguns, is recorded by towed streamers or by portable ocean-bottom nodes on the seafloor. The recorded wavefield commonly includes direct arrivals, reflections, refractions, and other wave types. Among these, seismic reflections - representing energy traveling from the source to subsurface interfaces and back to the receivers - carry essential subsurface information and form the basis for seismic imaging and reservoir characterization. Direct arrivals (DAs), on the other hand, travel directly from the source to the receivers without interacting with the subsurface. DAs are typically considered to be noise in conventional imaging workflows and are usually removed during preprocessing. Conventionally regarded as another type of noise, surface-related multiples are events that travel from the sources to subsurface interfaces and then reflect off the sea surface before reaching the receivers. Because traditional imaging methods utilize reflection events that do not interact with the free surface, these multiples are generally incompatible with standard processing workflows and must be attenuated. As a result, a demultiple process represents one of the most critical - yet challenging - steps in marine seismic data processing.

A relatively recent demultiple approach, known as up/down deconvolution (UDD), provides a data-driven, streamlined, and cost-effective workflow for multiple attenuation. Unlike many conventional demultiple methods, which operate after direct arrival removal, UDD relies on DAs as a key component of the deconvolution process. However, due to acquisition geometry constraints, the recorded DAs cover only a limited range of angles. Accurately reconstructing the missing portions of the DA wavefield is therefore essential for successfully applying UDD to marine streamer data.

Traditionally, complete DA information has been obtained using near-field hydrophone recordings. This approach, however, requires additional instrumentation and subsequent processing steps. Alternative solutions, such as source-over-streamer acquisition, have been proposed but remain rarely used due to significant logistical and economic challenges. Beyond acquisition-stage solutions, it is possible to exploit the internal relationships between DAs and other recorded events - particularly reflections - to estimate the missing DA components during data processing.

Accordingly, there is a need for systems and methods for direct arrival estimation for marine seismic data.

### SUMMARY

This disclosure pertains to systems and methods for direct arrival estimation for marine seismic data.

A first aspect of this disclosure pertains to a computer-implemented method for estimating direct-arrival energy in seismic data acquired in a marine environment, the method including: executing, by one or more processors, operations on seismic data that contain up-going and down-going wavefields in which direct-arrival information is not properly or completely recorded, processing the seismic data using a computer-based wavefield-analysis technique to identify water-layer reverberation events within the up-going and down-going wavefields, leveraging, through computer-implemented analysis, stable relationships among water-layer reverberations, computing, by the one or more processors, an estimated direct-arrival signal based on the identified relationships to compensate for missing or improperly recorded direct-arrival information, and producing, using the one or more processors, a direct-arrival estimate configured for use in subsequent seismic-processing operations.

A second aspect of this disclosure pertains to the method of the first clause, wherein the processing the seismic data includes separating the acquired wavefield into up-going and down-going components using a wavefield-decomposition technique.

A third aspect of this disclosure pertains to the method of the first clause, wherein the processing the seismic data includes distinguishing water-layer reverberations from deeper reflections.

A fourth aspect of this disclosure pertains to the method of the first clause, wherein the identifying water-layer events includes detecting a water-bottom primary and at least one higher-order water-layer reverberation based on their relative timing, polarity and amplitude characteristics, and consistent behavior across source-receiver offsets.

A fifth aspect of this disclosure pertains to the method of the first clause, wherein the computing the estimated direct-arrival signal further includes evaluating consistency between the estimated direct-arrival signal and synthetic or modeled benchmarks to verify stable amplitude relationships and ensure suitability for use in subsequent demultiple or imaging processes.

A sixth aspect of this disclosure pertains to the method of the first clause, wherein the processing the seismic data further includes extracting water-layer reverberations by isolating up-going and down-going events through interpolation and multi-component separation techniques to obtain clean inputs for direct-arrival estimation.

A seventh aspect of this disclosure pertains to the method of the first clause, wherein the identifying stable relationships among water-layer events includes pairing corresponding up-going and down-going reverberation events including substantially same incidence characteristics, such that amplitudes of the up-going and down-going reverberation events exhibit a consistent relationship that enables reconstruction of the missing direct-arrival energy.

An eighth aspect of this disclosure pertains to one or more non-transitory computer-readable media storing instructions that, when executed by one or more processors of a computing system, cause the computing system to perform operations for estimating direct-arrival energy in seismic data acquired in a marine environment, the operations including: executing, by the one or more processors, operations on seismic data that contain up-going and down-going wavefields in which direct-arrival information is not properly or completely recorded, processing the seismic data using a computer-based wavefield-analysis technique to identify water-layer reverberation events within the up-going and down-going wavefields, leveraging, through computer-implemented analysis, stable relationships among water-layer reverberations, computing, by the one or more processors, an estimated direct-arrival signal based on the identified relationships to compensate for missing or improperly recorded direct-arrival information, and producing, using the one or more processors, a direct-arrival estimate configured for use in subsequent seismic-processing operations.

A ninth aspect of this disclosure pertains to the one or more non-transitory computer-readable media of the eighth clause, wherein the processing the seismic data includes separating the acquired wavefield into up-going and down-going components using a wavefield-decomposition technique.

A tenth aspect of this disclosure pertains to the one or more non-transitory computer-readable media of the eighth clause, wherein the processing the seismic data includes distinguishing water-layer reverberations from deeper reflections.

An eleventh aspect of this disclosure pertains to the one or more non-transitory computer-readable media of the eighth clause, wherein the identifying water-layer events includes detecting a water-bottom primary and at least one higher-order water-layer reverberation based on their relative timing, polarity and amplitude characteristics, and consistent behavior across source-receiver offsets.

A twelfth aspect of this disclosure pertains to the one or more non-transitory computer-readable media of the eighth clause, wherein the computing the estimated direct-arrival signal further includes evaluating consistency between the estimated direct-arrival signal and synthetic or modeled benchmarks to verify stable amplitude relationships and ensure suitability for use in subsequent demultiple or imaging processes.

A thirteenth aspect of this disclosure pertains to the one or more non-transitory computer-readable media of the eighth clause, wherein the processing the seismic data further includes extracting water-layer reverberations by isolating up-going and down-going events through interpolation and multi-component separation techniques to obtain clean inputs for direct-arrival estimation.

A fourteenth aspect of this disclosure pertains to the one or more non-transitory computer-readable media of the eighth clause, wherein the identifying stable relationships among water-layer events includes pairing corresponding up-going and down-going reverberation events including substantially same incidence characteristics, such that amplitudes of the up-going and down-going reverberation events exhibit a consistent relationship that enables reconstruction of the missing direct-arrival energy.

A fifteenth aspect of this disclosure pertains to a system for estimating direct-arrival energy in seismic data acquired in a marine environment, including: one or more processors, and at least one memory including at least one non-transitory computer-readable medium storing instructions that, when executed by at least one of the one or more processors, cause the system to perform operations, the operations including: executing, by the one or more processors, operations on seismic data that contain up-going and down-going wavefields in which direct-arrival information is not properly or completely recorded, processing the seismic data using a computer-based wavefield-analysis technique to identify water-layer reverberation events within the up-going and down-going wavefields, leveraging, through computer-implemented analysis, stable relationships among water-layer reverberations, computing, by the one or more processors, an estimated direct-arrival signal based on the identified relationships to compensate for missing or improperly recorded direct-arrival information, and producing, using the one or more processors, a direct-arrival estimate configured for use in subsequent seismic-processing operations.

A sixteenth aspect of this disclosure pertains to the system of the fifteenth clause, wherein the processing the seismic data includes separating the acquired wavefield into up-going and down-going components using a wavefield-decomposition technique.

A seventeenth aspect of this disclosure pertains to the system of the fifteenth clause, wherein the processing the seismic data includes distinguishing water-layer reverberations from deeper reflections.

An eighteenth aspect of this disclosure pertains to the system of the fifteenth clause, wherein the identifying water-layer events includes detecting a water-bottom primary and at least one higher-order water-layer reverberation based on their relative timing, polarity and amplitude characteristics, and consistent behavior across source-receiver offsets.

A nineteenth aspect of this disclosure pertains to the system of the fifteenth clause, wherein the computing the estimated direct-arrival signal further includes evaluating consistency between the estimated direct-arrival signal and synthetic or modeled benchmarks to verify stable amplitude relationships and ensure suitability for use in subsequent demultiple or imaging processes.

A twentieth aspect of this disclosure pertains to the system of the fifteenth clause, wherein the processing the seismic data further includes extracting water-layer reverberations by isolating up-going and down-going events through interpolation and multi-component separation techniques to obtain clean inputs for direct-arrival estimation.

A twenty-first aspect of this disclosure pertains to the system of the fifteenth clause, wherein the identifying stable relationships among water-layer events includes pairing corresponding up-going and down-going reverberation events including substantially same incidence characteristics, such that amplitudes of the up-going and down-going reverberation events exhibit a consistent relationship that enables reconstruction of the missing direct-arrival energy.

This summary is provided to introduce a selection of concepts that are further described below in the detailed description. This summary is not intended to identify key or essential features of the claimed subject matter, nor is it intended to be used as an aid in limiting the scope of the claimed subject matter.

Additional features and advantages of embodiments of the disclosure will be set forth in the description which follows, and in part will be obvious from the description, or may be learned by the practice of such embodiments. The features and advantages of such embodiments may be realized and obtained by means of the instruments and combinations particularly pointed out in the appended claims. These and other features will become more fully apparent from the following description and appended claims or may be learned by the practice of such embodiments as set forth hereinafter.

### BRIEF DESCRIPTION OF DRAWINGS

To describe the manner in which the above-recited and other features of the disclosure can be obtained, a more particular description will be rendered by reference to specific implementations thereof, which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings.
FIG. 1 is a schematic view illustrating an example of a geologic environment.
FIG. 2 is a schematic view of ray paths of an example demonstrating an up/down deconvolution (UDD) technique.
FIG. 3 is a schematic view of events recording in a towed streamer acquisition.
FIGs. 4 and 5 are graphs of experimental results using a synthetic dataset.
FIGs. 6 and 7 are graphs of experimental results using field data.
FIG. 8 is a flowchart for an example method.
FIG. 9 illustrates certain components that may be included within a computer system according to an example embodiment of the present disclosure.

Before explaining the disclosed embodiment of this disclosure in detail, it is to be understood that the invention is not limited in its application to the details of the particular arrangement shown, as the invention is capable of other embodiments. Example embodiments are illustrated in referenced figures of the drawings. It is intended that the embodiments and figures disclosed herein are to be considered illustrative rather than limiting. Also, the terminology used herein is for the purpose of description and not of limitation.

### DETAILED DESCRIPTION

While the subject disclosure applies to embodiments in many different forms, specific embodiments are shown in the drawings and will be described in detail herein with the understanding that the present disclosure is an example of the principles of the invention. It is not intended to limit the invention to the specific illustrated embodiments. The features of the invention disclosed herein in the description, drawings, and claims can be significant, both individually and in any desired combinations, for the operation of the invention in its various embodiments. Features from one embodiment can be used in other embodiments of the invention. In the description of the drawings, like reference numerals refer to like elements.

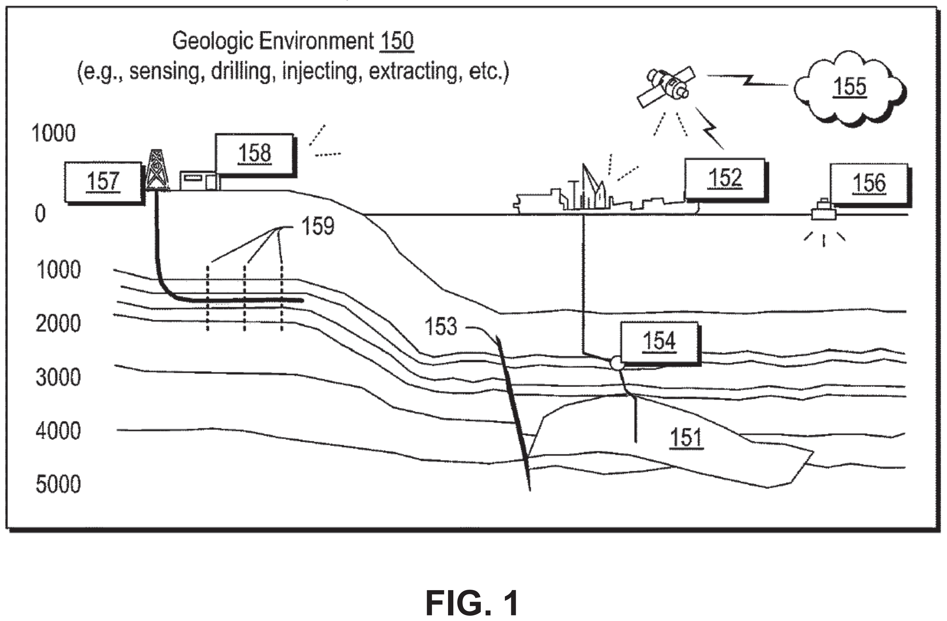

FIG. 1 is a schematic view illustrating an example of a geologic environment.

In the example of FIG. 1, an example geologic environment 150 may include layers (e.g., stratification) that may include a reservoir 151 and that may be intersected by a fault 153. As an example, the geologic environment 150 may be outfitted with a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a wellsite and include sensing, detecting, emitting or other circuitry. Such equipment may include storage and communication circuitry to store and to communicate data, instructions, etc. As an example, one or more satellites may be provided for purposes of communications, data acquisition, etc. For example, FIG. 1 shows a satellite in communication with the one or more networks 155 that may be configured for communications, noting that the satellite may additionally or alternatively include circuitry for imagery (e.g., spatial, spectral, temporal, radiometric, etc.).

FIG. 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled at a wellsite for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

In typical marine seismic acquisition, seismic energy generated by, e.g., air-guns, is reflected back from subsurface interfaces and recorded, for example, by streamers towed by vessels. Such marine seismic data is often contaminated by strong reverberations from the sea surface. These free-surface multiples often severely impair subsequent seismic imaging and reservoir characterization. One widely used free-surface demultiple technique is the surface-related multiple elimination or general surface multiple prediction (GSMP), which predicts surface multiples by convolution followed by adaptive subtraction for multiple attenuation.

An alternative data-driven demultiple method is multiple attenuation by up/down deconvolution (MAUDD) or up/down deconvolution (UDD) for short. Under 1D presumption, it performs deghosting, designature, and demultiple simultaneously and requires fewer steps of pre- and post-processing, hence representingan overall more efficient seismic processing sequence for marine data. Other advantages include more relaxed requirements on spatial sampling and on the application of adaptive subtraction.

While UDD has become a standard step in processing ocean bottom seismic (OBS) data, relevant research and especially field applications on towed streamer data is less common. One major obstacle is the missing near-offset data (particularly the direct arrivals or "DAs") resulting from the logistical restrictions at acquisition stages. Some proposed solutions to fill the data gap include the notional source technology with near-field hydrophones (NFH) recording and the source-over-streamer acquisition technique. Instead of supplementing DAs at acquisition stages, the disclosed technique may estimate DAs by leveraging constant ratios of early-water reverberation events.

Example embodiments of the present disclosure provide an alternative method requiring no NFH recordings, to estimate DAs for UDD implementation. Presuming approximately a laterally homogeneous subsurface earth model as required by UDD, the deconvolutions of each pair of up- and down-going water-layer events with the same ray parameter (or incidence angle) remains constant. Consequently, the DAs can be derived in the tau-p-q domain with the picked water column primaries of up- and down-going waves, as well as the first-order up-going surface multiple. The inventors demonstrated the effectiveness of the proposed DA estimation and the subsequent UDD implementation with a synthetic and a field-data example.

### - Theory

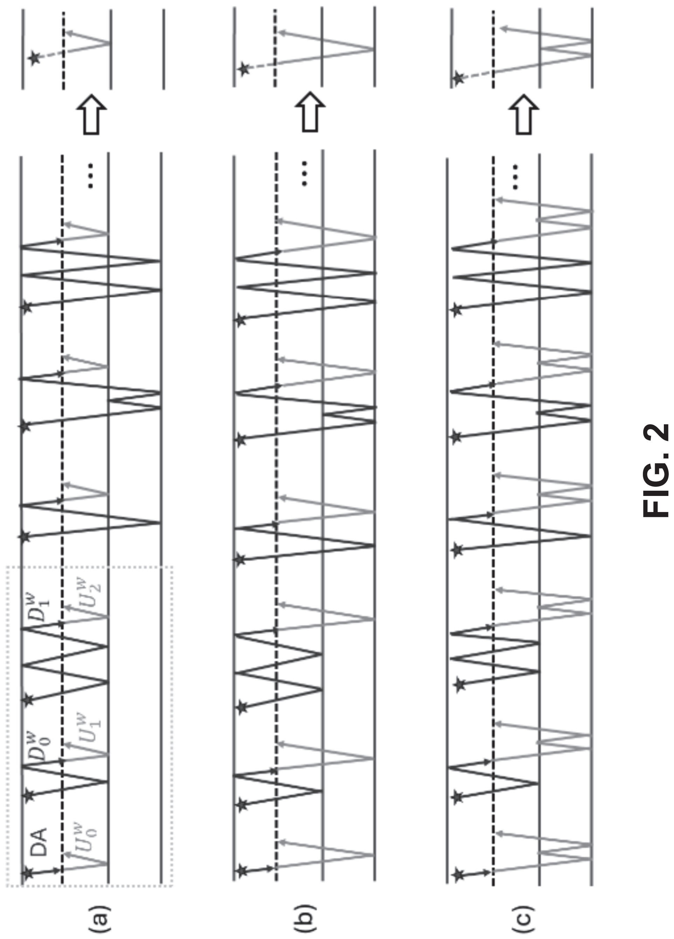

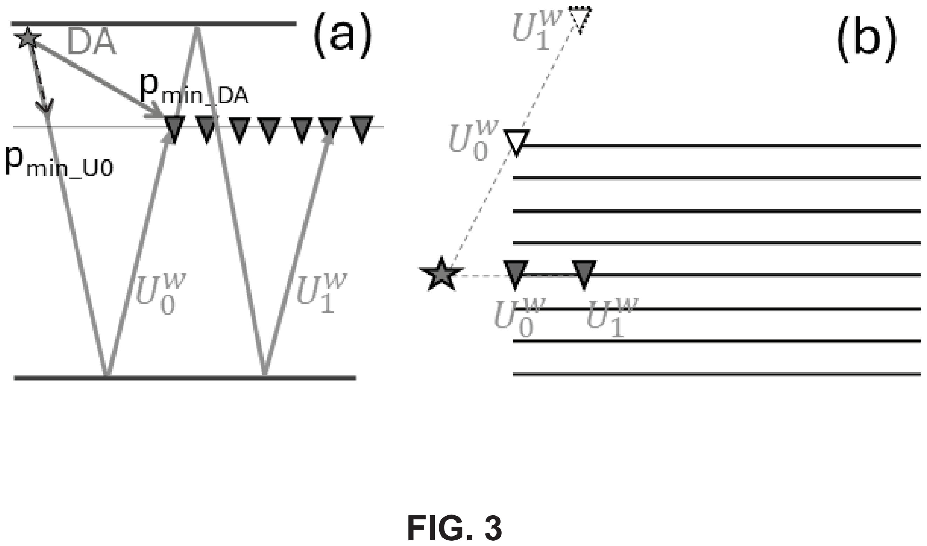

FIG. 2 is a schematic view of ray paths of an example demonstrating an up/down deconvolution (UDD) technique. FIG. 3 is a schematic view of events recording in a towed streamer acquisition.

FIG. 2 is an illustration of an example UDD method. The dark-colored portions of the paths represent down-going waves, while the combination of dark-colored and light-colored paths denote the corresponding up-going waves. UDD thus leads to the corresponding reflectivity (the light-colored lines), which correspond to a water bottom primary shown in graph (a), a primary from second interface showin in graph (b), and an internal multiple shown in graph (c) (higher-orders are not shown in the FIG. 2 illustration). The UDD results on the right can be re-datumed (indicated by the dashed lines) to the source depth, maintaining the original acquisition geometry, and represent the desired data with free-surface multiples eliminated. A star at the beginning of each path denotes a source, and the horizontal dashed line in each graph marks the depth of receivers.

Under an approximate flat-layer (one-dimensional (1D)) presumption, the deconvolution of the entire up-going (UP) and down-going (DWN) events can be used to extract the subsurface reflectivity (shown in FIG. 2), which is commonly known as multiple attenuation by up/down deconvolution (MAUDD) or UDD. Similarly, seabed reflectivity (*R_{seabed}*) can be expressed as the deconvolution of the UP and DWN water column reverberations (see the dotted-line box in graph (a) of FIG. 2). The inputs can be either the complete sets of UP and DWN, or each pair (e.g., ${U}_{0}^{w}$ and *DA,* ${U}_{1}^{w}$ and ${D}_{0}^{w} , {U}_{2}^{w}$ and ${D}_{1}^{w}$ (see graph (a) of FIG. 2), and may be expressed according to Equation 1 below. ${R}_{seabed} = \frac{{U}_{0}^{w}}{DA} = \frac{{U}_{1}^{w}}{{D}_{0}^{w}} = \frac{{U}_{2}^{w}}{{D}_{1}^{w}} = ⋯ = \frac{{\sum }_{i = 0} {U}_{i}^{w}}{DA + {\sum }_{i = 0} {D}_{i}^{w}} ,$

In Equation 1, the subscript numbers indicate the orders of water bottom reverberations (e.g., 0 denotes a primary, and i denotes an *i*^{th} order multiple), and the superscript w indicates that all events are water reverberations.

Hence, DA can be derived from early events as in Equation 2 below. $DA = \frac{{U}_{0}^{w} {D}_{0}^{w}}{{U}_{1}^{w}} .$

The water column reverberations ( ${U}_{i}^{w}$ and ${D}_{i}^{w}$) usually come with relatively strong amplitudes and are easy to identify due to the strong property contrast at the water bottom. However, such event separation can become difficult in very shallow (e.g., < 50 m) water environment at typical seismic frequency range.

FIG. 3 illustrates events recording in a typical towed streamer acquisition, where the star and triangles denote source and receivers, respectively. In the section view of part (a), the minimum horizontal slowness of the recorded up-going water bottom primary reflections ${U}_{0}^{w}$ are denoted by p_{min_U0}. The corresponding DA (the dark dashed arrow), however, is not recorded. In other words, the minimum horizontal slowness of the recorded DA (p_{min_DA}, solid dark arrow) is significantly larger than p_{min_U0}. In the plane view of part (b), both ${U}_{0}^{w}$ and ${U}_{i}^{w}$ are recorded at near cables (dark triangles), while for primaries ${U}_{0}^{w}$ recorded at far cables (solid light triangle) the corresponding multiple events ${U}_{i}^{w}$ are often not recorded (dashed light triangle), leading to the deterioration of DA estimation at these azimuths.

The proposed water-reverberation-based DA estimation method helps to extend the minimum incidence angles down to p_{min_U0} from p_{min_DA} (FIG. 3, part (a)), enabling effective UDD at these extended slowness ranges. In principle, a lower slowness limit can be achieved by utilizing higher-order events, but with increased difficulty of picking and selecting, because of stronger event interferences. It is also noteworthy that at far cables, the reliable slowness range for estimated DA shrinks due to the increased p_{min_U0} and p_{min_DA} (or increased incidence angles). The missing records of multiple events ${U}_{1}^{w}$ at far cables further contributes to such deterioration (FIG. 3, part (b).

### - Synthetic Example

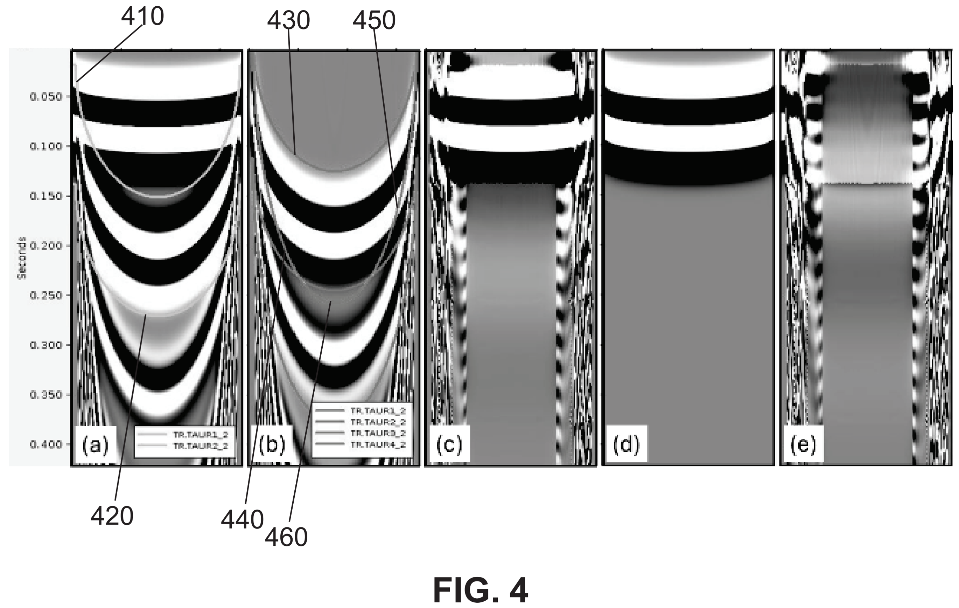

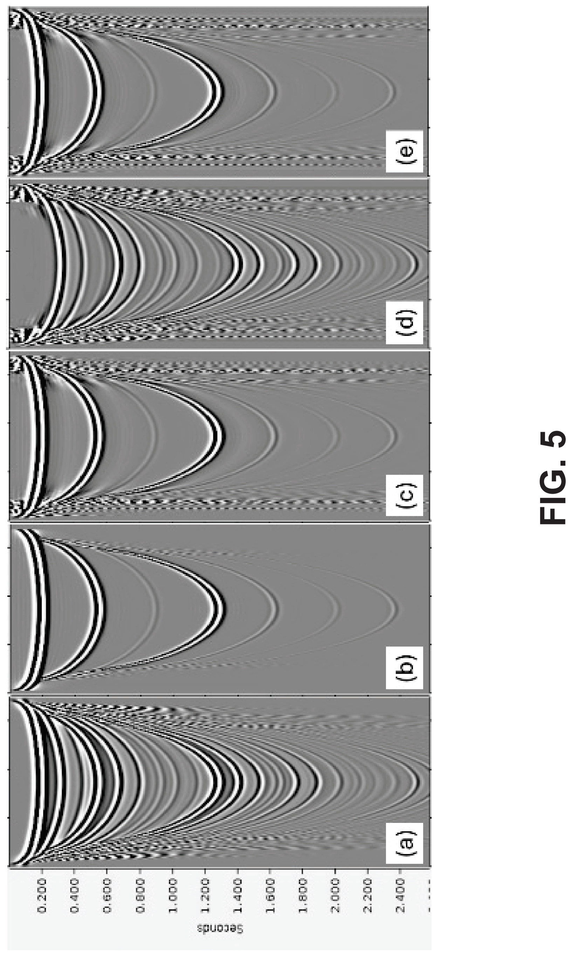

FIGs. 4 and 5 are graphs of experimental results using a synthetic dataset.

FIG. 4 shows a synthetic data example in the tau-p domain. FIG. 4, graph (a) shows down-going data. FIG. 4, graph (b) shows up-going data. The range of ${D}_{0}^{w}$ is between lines 410 and 420. The range of ${U}_{0}^{w}$ is between lines 430 and 440. The range of ${U}_{1}^{w}$ is between lines 450 and 460. FIG. 4, graph (c) is the estimated DA from Equation 2. FIG. 4, graph (d) is the actual DA from FIG. 4, graph (a). FIG. 4, graph (e) shows the difference between values in FIG. 4, graphs (c) and (d). All panels of FIG. 4, graphs (a) through (e) are in the same scale.

The inventors first tested the proposed DA estimation method on a synthetic dataset from a three-interface flat model, with water depth of 100 m. Here, they considered an ideal acquisition case with both positive and negative offsets. The input down-going and up-going waves (shown in FIG. 4, graphs (a) and (b) are generated by a reflectivity method-based modeling engine. The estimated DA (FIG. 4, graph (c)) using Equation 2 is very close to the actual one (FIG. 4, graph (d)) in the (small to moderate) p-value ranges of interest.

FIG. 5 shows UDD test results of the synthetic data. FIG. 5, graph (a) is the input up-going data. FIG. 5, graph (b) reference UDD result with actual DA. FIG. 5, graphs (c) to (e) are results using the estimated DA: FIG. 5, graph (c) UDD, FIG. 5, graph (d) multiple model, and FIG. 5, graph (e) is a two-step demultiple result, e.g., from FIG. 5, graphs (a)-(d).

The accuracy of the proposed DA estimation method is further demonstrated by the decent free-surface demultiple results applying UDD (FIG. 5, graph (c)) which is comparable to the reference UDD result (FIG. 5, graph (b)) using the actual DA. The generated multiple model (FIG. 5, graph (d)) exhibits consistent polarity and amplitude with the input data (FIG. 5, graph (a)), thus eliminating the need for adaptive subtraction, which other methods, e.g., GSMP, normally require to obtain satisfactory demultiple results (FIG. 5, graph (e)).

### - Field-data example

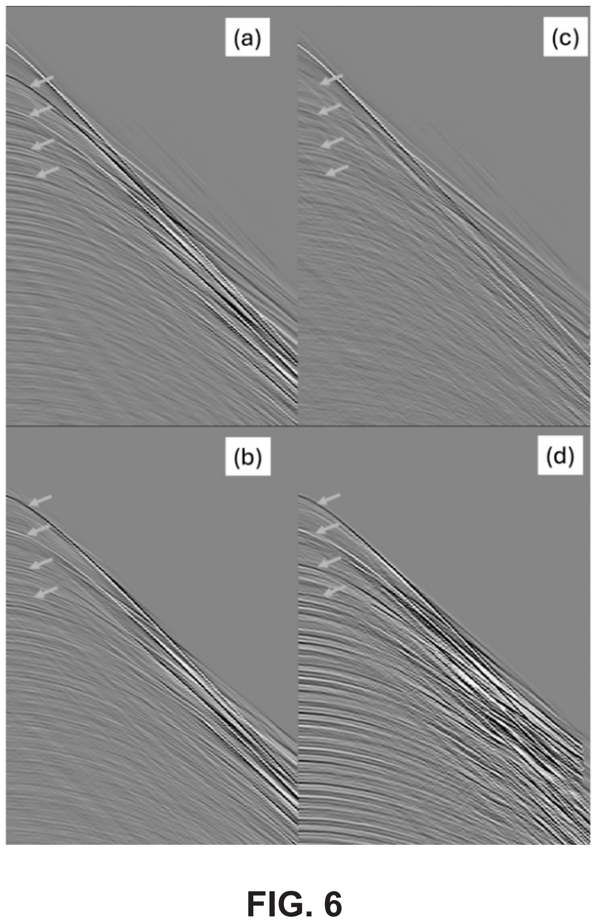

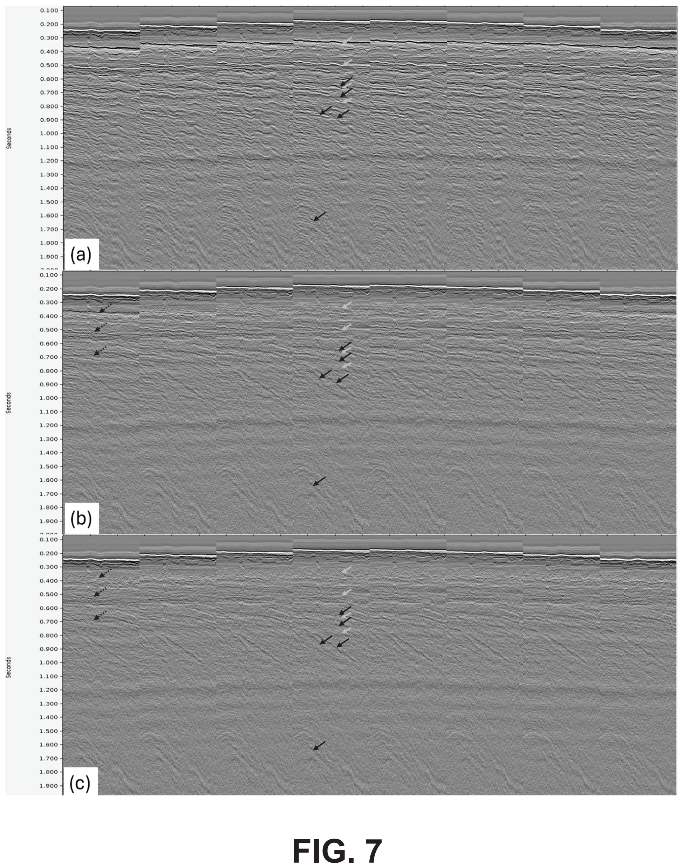

FIGs. 6 and 7 are graphs of experimental results using field data.

The inventors applied the integrated MAUDD flow using the disclosed DA estimation method on a narrow-azimuthal (NAZ) field dataset with eight cables. The seabed depths of the study area ranged between 118 m and 127 m. The depths of sources and receivers were approximately 9 m and 17 m, respectively. The inventors selected a sail line of 564 shots, with shot increments of 25 m. Minimum near offsets were approximately 155 m for near cables and 300 m for far cables. Other acquisition parameters included cable lengths of approximately 3000 m, channel distances of 6.25 m, and cable distances of 75 m.

FIG. 6 shows experimental results from one sample shot gathered at one near cable, whose nearest offset was approximately 155 m. FIG. 6, graph (a) shows input up-going data. FIG. 6, graph (b) shows multiple model by UDD. FIG. 6, graph (c) shows demultiple results, e.g., from FIG. 6, graphs (a) and (b). FIG. 6, graph (d) shows a reference GSMP multiple model. GSMP results are shown as being rescaled for comparison purposes. The arrows mark some free-surface multiple events. All panels for FIG. 6, graphs (a)-(d) were plotted with t^{1.5} gain.

The inputs for the test were separated into UP (FIG. 6, graph (a)) and DWN (not shown) data from joint interpolation and three-dimensional (3D) up/down separation by generalized matching pursuit on multi-measurement dataset. For conventional one-component (e.g., pressure) streamer data, up/down separation can be achieved through adaptive deghosting. Some additional major processing steps may include (1) 3D spatial interpolation and regularization with matching pursuits Fourier interpolation, followed by (2) 3D radon transform, (3) the DA estimation proposed in this study, (4) UDD, and (5) inverse radon transform.

FIG. 6, graph (a) displays one shot gather in the time-offset (tx) domain at one near cable, which suffers from surface multiples. Notice how effectively the proposed UDD workflow with DA estimation contributes to the multiple suppression while preserving primaries (e.g., compare FIG. 6, graph (a) to FIG. 6, graph (c)). Note that no adaptive subtraction is applied for FIG. 6, graph (c) as the predicted multiple model (FIG. 6, graph (b)) reasonably retains the amplitudes of events, compared to the GSMP model (FIG. 6, graph (d)).

FIG. 7 shows common-offset gather comparisons. FIG. 7, graph (a) shows input up-going data, demultiple results by FIG. 7, graph (b) shows direct subtraction, and FIG. 7, graph (c) shows adaptive subtraction. The nominal inline offset was approximately 150 m, and each gather corresponds to one of the eight cables in the spread. The light arrows mark some multiple events, the dark arrows mark some primary events revealed after demultiple (compare FIG. 7, graph (a) with FIG. 7, graphs (b) and (c)), and dashed arrows mark some multiple residuals further suppressed by adaptive subtraction (compare FIG. 7, graph (b) with FIG. 7, graph (c)). All panels are plotted with t^{1.5} gain.

Similar observations can be made from the common-offset gathers, in which UDD with the estimated DAs effectively suppressed the free-surface multiples (see the arrows in FIG. 7). After demultiple, some subtle structures begin to emerge (see the dark arrows in FIG. 7). Again, the GSMP model (not shown) is characterized by incorrect relative amplitudes, which necessitates adaptive subtraction for multiple attenuation. In contrast, these issues are overall less problematic for the multiple model predicted by UDD (not shown), allowing for direct subtraction to suppress most of the surface multiples (FIG. 7, graph (b)). However, multiple residuals increase from near cables (middle panels) to far cables (edge panels), likely due to the deterioration of the DA estimation caused by missing records of corresponding ${U}_{1}^{w}$ events (FIG. 3, part (b)). Multiple residuals can also arise due to the violation of the 1D presumption. The multiple attenuation results, especially at far cables, can be further improved by applying additional procedures, such as adaptive matching and subtraction (FIG. 7, graph (c)) or other residual multiple attenuation schemes.

Example embodiments of the present disclosure provide a novel DA estimation technique tailored for UDD implementations on streamer data. Example embodiments leverage the invariant ratios between each pair of the up- and down-going water column reverberations, presuming an approximately constant bathymetry. Validation with both synthetic and field data demonstrated the effectiveness of our DA estimation approach. The multiple models predicted by UDD with the estimated DAs well preserves the kinematics and amplitudes of multiple events (compared to that achieved by GSMP). Consequently, they do not heavily, if at all, rely on adaptive subtraction for effective surface multiple suppression. Therefore, the disclosed DA estimation followed by UDD offers a streamlined and cost-effective alternative to traditional demultiple workflows, which are typically burdened with numerous processing steps.

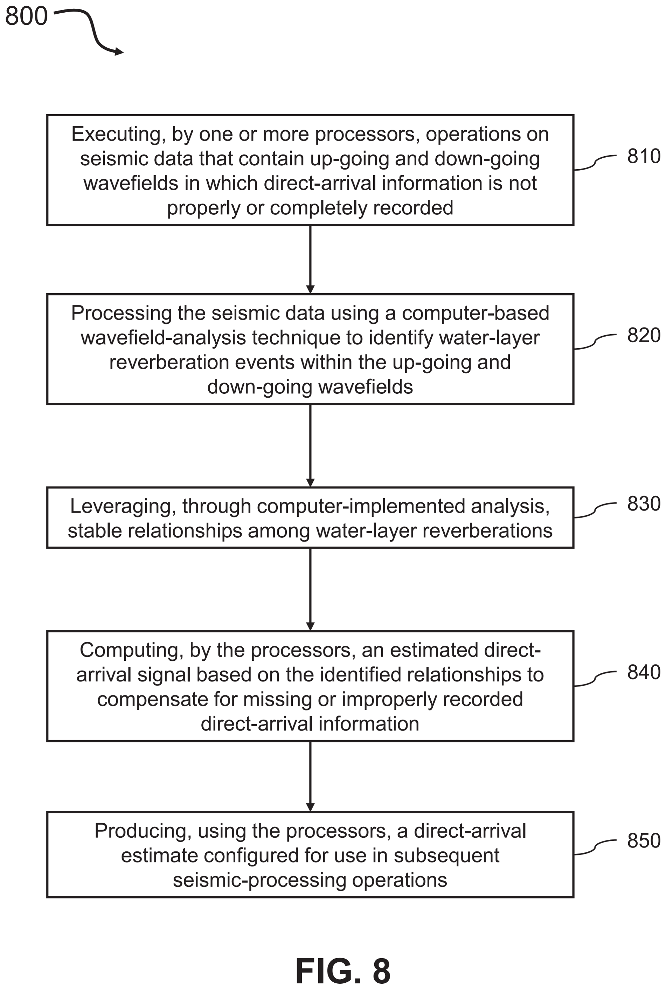

FIG. 8 is a flowchart for an example method.

FIG. 8 shows an example computer-implemented method 800 for estimating direct-arrival energy in seismic data acquired in a marine environment. The example method 800 may include, at 810, executing, by one or more processors, operations on seismic data that contain up-going and down-going wavefields in which direct-arrival information is not properly or completely recorded. The example method 800 may further include, at 820, processing the seismic data using a computer-based wavefield-analysis technique to identify water-layer reverberation events within the up-going and down-going wavefields. The example method 800 may further include, at 830, leveraging, through computer-implemented analysis, stable relationships among water-layer reverberations. The example method 800 may further include, at 840, computing, by the processors, an estimated direct-arrival signal based on the identified relationships to compensate for missing or improperly recorded direct-arrival information. The example method 800 may further include, at 850, producing, using the processors, a direct-arrival estimate configured for use in subsequent seismic-processing operations.

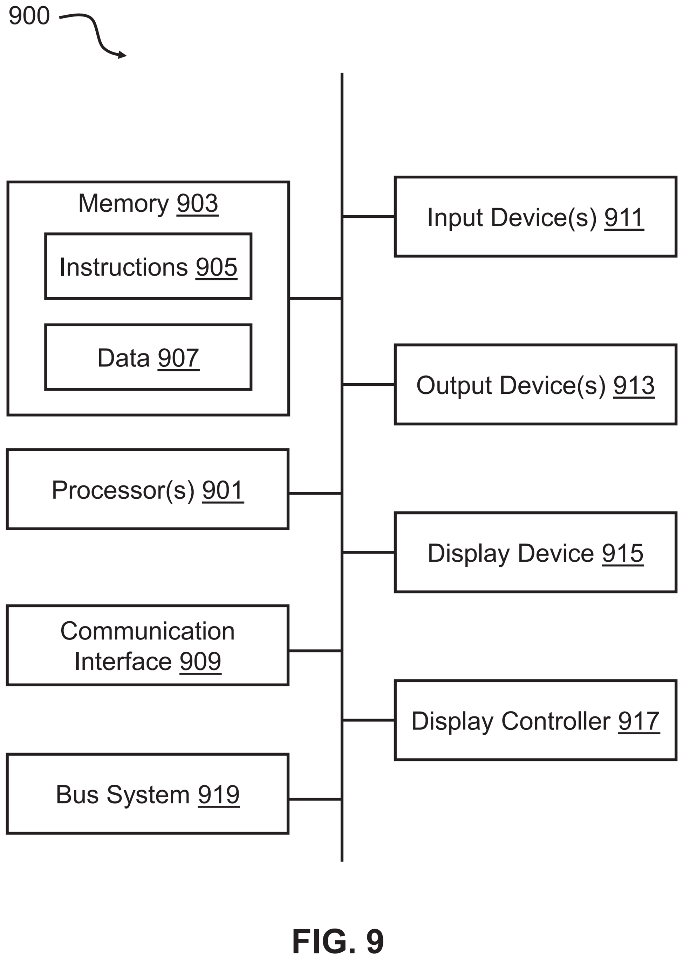

FIG. 9 illustrates certain components that may be included within a computer system according to an example embodiment of the present disclosure.

FIG. 9 illustrates certain components that may be included within a computer system 900, which may be used to control features according to embodiments of the present disclosure, such as the features discussed with reference to FIGs. 1-8. One or more computer systems 900 may be used to implement the various devices, components, and systems described herein.

The computer system 900 includes one or more processors 901. The processor(s) 901 may be a single processor or may include multiple processors and/or sub-processors. The processor(s) 901 may be a general-purpose single- or multi-chip microprocessor (e.g., an Advanced RISC (Reduced Instruction Set Computer) Machine (ARM)), a special-purpose microprocessor (e.g., a digital signal processor (DSP)), a microcontroller, a programmable gate array, etc. The processor(s) 901 may be referred to as a central processing unit (CPU). Although a single processor(s) 901 is shown in the computer system 900 of FIG. 9, in an alternative configuration, a combination of processors (e.g., an ARM and DSP) could be used. In one or more embodiments, the computer system 900 further includes one or more graphics processing units (GPUs), which can provide processing services related to both entity classification and graph generation.

The computer system 900 also includes memory 903 in electronic communication with the processor(s) 901. The memory 903 may be any electronic component capable of storing electronic information. For example, the memory 903 may be embodied as random access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM) memory, registers, at least one non-transitory computer-readable and/or processor-readable medium, and so forth, including combinations thereof. The memory may include a single memory device or multiple memory devices.

Instructions 905 and data 907 may be stored in the memory 903. The instructions 905 may be executable by the processor(s) 901 to implement some or all of the functionality disclosed herein. Executing the instructions 905 may involve the use of the data 907 that is stored in the memory 903. Any of the various examples of modules and components described herein may be implemented, partially or wholly, as instructions 905 stored in memory 903 and executed by the processor(s) 901. Any of the various examples of data described herein may be among the data 907 that is stored in memory 903 and used during execution of the instructions 905 by the processor(s) 901.

A computer system 900 may also include one or more communication interfaces 909 for communicating with other electronic devices. The communication interface(s) 909 may be based on wired communication technology, wireless communication technology, or both. Some examples of communication interfaces 909 include a Universal Serial Bus (USB), an Ethernet adapter, a wireless adapter that operates in accordance with an Institute of Electrical and Electronics Engineers (IEEE) 902.11 wireless communication protocol, a Bluetooth^{®} wireless communication adapter, and an infrared (IR) communication port.

A computer system 900 may also include one or more input devices 911 and one or more output devices 913. Some examples of input devices 911 include a keyboard, mouse, microphone, remote control device, button, joystick, trackball, touchpad, and lightpen. Some examples of output devices 913 include a speaker and a printer. One specific type of output device that is typically included in a computer system 900 is a display device 915. Display devices 915 used with embodiments disclosed herein may utilize any suitable image projection technology, such as liquid crystal display (LCD), light-emitting diode (LED), gas plasma, electroluminescence, or the like, and may be provided in any desired number. At least one display controller 917 may also be provided, for converting data 907 stored in the memory 903 into text, graphics, and/or moving images (as appropriate) shown on the display device 915.

The various components of the computer system 900 may be coupled together by one or more buses, which may include a power bus, a control signal bus, a status signal bus, a data bus, etc. For the sake of clarity, the various buses are illustrated in FIG. 9 as a bus system 919.

The following are sections in accordance with at least one embodiment of the present disclosure:
Clause 1: A computer-implemented method for estimating direct-arrival energy in seismic data acquired in a marine environment, the method including: executing, by one or more processors, operations on seismic data that contain up-going and down-going wavefields in which direct-arrival information is not properly or completely recorded, processing the seismic data using a computer-based wavefield-analysis technique to identify water-layer reverberation events within the up-going and down-going wavefields, leveraging, through computer-implemented analysis, stable relationships among water-layer reverberations, computing, by the one or more processors, an estimated direct-arrival signal based on the identified relationships to compensate for missing or improperly recorded direct-arrival information, and producing, using the one or more processors, a direct-arrival estimate configured for use in subsequent seismic-processing operations.
Clause 2: The method of clause 1, wherein the processing the seismic data includes separating the acquired wavefield into up-going and down-going components using a wavefield-decomposition technique.
Clause 3: The method of clause 1, wherein the processing the seismic data includes distinguishing water-layer reverberations from deeper reflections.
Clause 4: The method of clause 1, wherein the identifying water-layer events includes detecting a water-bottom primary and at least one higher-order water-layer reverberation based on their relative timing, polarity and amplitude characteristics, and consistent behavior across source-receiver offsets.
Clause 5: The method of clause 1, wherein the computing the estimated direct-arrival signal further includes evaluating consistency between the estimated direct-arrival signal and synthetic or modeled benchmarks to verify stable amplitude relationships and ensure suitability for use in subsequent demultiple or imaging processes.
Clause 6: The method of clause 1, wherein the processing the seismic data further includes extracting water-layer reverberations by isolating up-going and down-going events through interpolation and multi-component separation techniques to obtain clean inputs for direct-arrival estimation.
Clause 7: The method of clause 1, wherein the identifying stable relationships among water-layer events includes pairing corresponding up-going and down-going reverberation events including substantially same incidence characteristics, such that amplitudes of the up-going and down-going reverberation events exhibit a consistent relationship that enables reconstruction of the missing direct-arrival energy.
Clause 8: One or more non-transitory computer-readable media storing instructions that, when executed by one or more processors of a computing system, cause the computing system to perform operations for estimating direct-arrival energy in seismic data acquired in a marine environment, the operations including: executing, by the one or more processors, operations on seismic data that contain up-going and down-going wavefields in which direct-arrival information is not properly or completely recorded, processing the seismic data using a computer-based wavefield-analysis technique to identify water-layer reverberation events within the up-going and down-going wavefields, leveraging, through computer-implemented analysis, stable relationships among water-layer reverberations, computing, by the one or more processors, an estimated direct-arrival signal based on the identified relationships to compensate for missing or improperly recorded direct-arrival information, and producing, using the one or more processors, a direct-arrival estimate configured for use in subsequent seismic-processing operations.
Clause 9: The one or more non-transitory computer-readable media of clause 8, wherein the processing the seismic data includes separating the acquired wavefield into up-going and down-going components using a wavefield-decomposition technique.
Clause 10: The one or more non-transitory computer-readable media of clause 8, wherein the processing the seismic data includes distinguishing water-layer reverberations from deeper reflections.
Clause 11: The one or more non-transitory computer-readable media of clause 8, wherein the identifying water-layer events includes detecting a water-bottom primary and at least one higher-order water-layer reverberation based on their relative timing, polarity and amplitude characteristics, and consistent behavior across source-receiver offsets.
Clause 12: The one or more non-transitory computer-readable media of clause 8, wherein the computing the estimated direct-arrival signal further includes evaluating consistency between the estimated direct-arrival signal and synthetic or modeled benchmarks to verify stable amplitude relationships and ensure suitability for use in subsequent demultiple or imaging processes.
Clause 13: The one or more non-transitory computer-readable media of clause 8, wherein the processing the seismic data further includes extracting water-layer reverberations by isolating up-going and down-going events through interpolation and multi-component separation techniques to obtain clean inputs for direct-arrival estimation.
Clause 14: The one or more non-transitory computer-readable media of clause 8, wherein the identifying stable relationships among water-layer events includes pairing corresponding up-going and down-going reverberation events including substantially same incidence characteristics, such that amplitudes of the up-going and down-going reverberation events exhibit a consistent relationship that enables reconstruction of the missing direct-arrival energy.
Clause 15: A system for estimating direct-arrival energy in seismic data acquired in a marine environment, including: one or more processors, and at least one memory including at least one non-transitory computer-readable medium storing instructions that, when executed by at least one of the one or more processors, cause the system to perform operations, the operations including: executing, by the one or more processors, operations on seismic data that contain up-going and down-going wavefields in which direct-arrival information is not properly or completely recorded, processing the seismic data using a computer-based wavefield-analysis technique to identify water-layer reverberation events within the up-going and down-going wavefields, leveraging, through computer-implemented analysis, stable relationships among water-layer reverberations, computing, by the one or more processors, an estimated direct-arrival signal based on the identified relationships to compensate for missing or improperly recorded direct-arrival information, and producing, using the one or more processors, a direct-arrival estimate configured for use in subsequent seismic-processing operations.
Clause 16: The system of clause 15, wherein the processing the seismic data includes separating the acquired wavefield into up-going and down-going components using a wavefield-decomposition technique.
Clause 17: The system of clause 15, wherein the processing the seismic data includes distinguishing water-layer reverberations from deeper reflections.
Clause 18: The system of clause 15, wherein the identifying water-layer events includes detecting a water-bottom primary and at least one higher-order water-layer reverberation based on their relative timing, polarity and amplitude characteristics, and consistent behavior across source-receiver offsets.
Clause 19: The system of clause 15, wherein the computing the estimated direct-arrival signal further includes evaluating consistency between the estimated direct-arrival signal and synthetic or modeled benchmarks to verify stable amplitude relationships and ensure suitability for use in subsequent demultiple or imaging processes.
Clause 20: The system of clause 15, wherein the processing the seismic data further includes extracting water-layer reverberations by isolating up-going and down-going events through interpolation and multi-component separation techniques to obtain clean inputs for direct-arrival estimation.
Clause 21: The system of clause 15, wherein the identifying stable relationships among water-layer events includes pairing corresponding up-going and down-going reverberation events including substantially same incidence characteristics, such that amplitudes of the up-going and down-going reverberation events exhibit a consistent relationship that enables reconstruction of the missing direct-arrival energy.

Systems and software, e.g., implemented on a non-transitory computer-readable medium, for performing the methods discussed herein are also within the scope of embodiments of the present disclosure.

Embodiments of the present disclosure may thus utilize a special-purpose or general-purpose computing system including computer hardware, such as, for example, one or more processors and system memory. Embodiments within the scope of the present disclosure also include physical and other computer-readable media for carrying or storing computer-executable instructions and/or data structures, including applications, tables, data, libraries, or other modules used to execute particular functions or direct selection or execution of other modules. Such computer-readable media can be any available media that can be accessed by a general-purpose or special-purpose computer system. Computer-readable media that store computer-executable instructions (or software instructions) are physical storage media. Computer-readable media that carry computer-executable instructions are transmission media. Thus, by way of example, and not limitation, embodiments of the present disclosure can include at least two distinctly different kinds of computer-readable media, namely physical storage media or transmission media. Combinations of physical storage media and transmission media should also be included within the scope of computer-readable media.

Both physical storage media and transmission media may be used to temporarily store or carry software instructions in the form of computer-readable program code that allows performance of embodiments of the present disclosure. Physical storage media may further be used to persistently or permanently store such software instructions. Examples of physical storage media include physical memory (e.g., RAM, ROM, EPROM, EEPROM, etc.), optical disk storage (e.g., CD, DVD, HD DVD, Blu-ray, etc.), storage devices (e.g., magnetic disk storage, tape storage, diskette, etc.), flash or other solid-state storage or memory, or any other non-transmission medium which can be used to store program code in the form of computer-executable instructions or data structures and which can be accessed by a general-purpose or special-purpose computer, whether such program code is stored as or in software, hardware, firmware, or combinations thereof.

A "network" or "communications network" may generally be defined as one or more data links that enable the transport of electronic data between computer systems and/or modules, engines, and/or other electronic devices. When information is transferred or provided over a communication network or another communications connection (either wired, wireless, or a combination of wired or wireless) to a computing device, the computing device properly views the connection as a transmission medium. Transmission media can include a communication network and/or data links, carrier waves, wireless signals, and the like, which can be used to carry desired program or template code means or instructions in the form of computer-executable instructions or data structures and which can be accessed by a general-purpose or special-purpose computer.

Further, upon reaching various computer system components, program code in the form of computer-executable instructions or data structures can be transferred automatically or manually from transmission media to physical storage media (or vice versa). For example, computer-executable instructions or data structures received over a network or data link can be buffered in memory (e.g., RAM) within a network interface module (NIC), and then eventually transferred to computer system RAM and/or to less volatile physical storage media at a computer system. Thus, it should be understood that physical storage media can be included in computer system components that also (or even primarily) utilize transmission media.

One or more specific embodiments of the present disclosure are described herein. These described embodiments are examples of the presently disclosed techniques. Additionally, in an effort to provide a concise description of these embodiments, not all features of an actual embodiment may be described in the specification. It should be appreciated that in the development of any such actual implementation, as in any engineering or design project, numerous embodiment-specific decisions will be made to achieve the developers' specific goals, such as compliance with system-related and business-related constraints, which may vary from one embodiment to another. Moreover, it should be appreciated that such a development effort might be complex and time-consuming, but would nevertheless be a routine undertaking of design, fabrication, and manufacture for those of ordinary skill having the benefit of this disclosure.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about," "~", or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize, in view of the present disclosure, that equivalent constructions do not depart from the spirit and scope of the present disclosure, and that various changes, substitutions, and alterations may be made to embodiments disclosed herein without departing from the spirit and scope of the present disclosure. Equivalent constructions, including functional "means-plus-function" clauses, are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words "means for" appear together with an associated function. Each addition, deletion, and modification to the embodiments that falls within the meaning and scope of the claims is to be embraced by the claims. Any trademarks mentioned herein are the property of their respective owners. Example embodiments are not limited to any particularly-mentioned products, trademarks, or properties.

The terms "approximately," "about," "~", and "substantially" as used herein represent an amount close to the stated amount that still performs a desired function or achieves a desired result. For example, the terms "approximately," "about," "~", and "substantially" may refer to an amount that is within less than 5% of, within less than 1% of, within less than 0.1% of, and within less than 0.01% of a stated amount. Further, it should be understood that any directions or reference frames in the preceding description are merely relative directions or movements. For example, any references to "up" and "down" or "above" or "below" are merely descriptive of the relative position or movement of the related elements.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A computer-implemented method (800) for estimating direct-arrival energy in seismic data (907) acquired in a marine environment, the method (800) comprising:
executing, by one or more processors (901), operations on seismic data (907) that contain up-going and down-going wavefields in which direct-arrival information is not properly or completely recorded;
processing the seismic data (907) using a computer-based wavefield-analysis technique to identify water-layer reverberation events within the up-going and down-going wavefields;
leveraging, through computer-implemented analysis, stable relationships among water-layer reverberations;
computing, by the one or more processors (901), an estimated direct-arrival signal based on the identified relationships to compensate for missing or improperly recorded direct-arrival information; and
producing, using the one or more processors (901), a direct-arrival estimate configured for use in subsequent seismic-processing operations.

2. The method (800) of claim 1, wherein the processing the seismic data (907) comprises separating the acquired wavefield into up-going and down-going components using a wavefield-decomposition technique.

3. The method (800) of claim 1 or 2, wherein the processing the seismic data (907) comprises distinguishing water-layer reverberations from deeper reflections.

4. The method (800) of any one of the preceding claims, wherein the identifying water-layer events comprises detecting a water-bottom primary and at least one higher-order water-layer reverberation based on their relative timing, polarity and amplitude characteristics, and consistent behavior across source-receiver offsets.

5. The method (800) of any one of the preceding claims, wherein the computing the estimated direct-arrival signal further comprises evaluating consistency between the estimated direct-arrival signal and synthetic or modeled benchmarks to verify stable amplitude relationships and ensure suitability for use in subsequent demultiple or imaging processes.

6. The method (800) of any one of the preceding claims, wherein the processing the seismic data (907) further comprises extracting water-layer reverberations by isolating up-going and down-going events through interpolation and multi-component separation techniques to obtain clean inputs for direct-arrival estimation.

7. The method (800) of any one of the preceding claims, wherein the identifying stable relationships among water-layer events comprises pairing corresponding up-going and down-going reverberation events comprising substantially same incidence characteristics, such that amplitudes of the up-going and down-going reverberation events exhibit a consistent relationship that enables reconstruction of the missing direct-arrival energy.

8. One or more non-transitory computer-readable media storing instructions (905) that, when executed by one or more processors (901) of a computing system, cause the computing system to perform a method (800) according to any one of the preceding claims.

9. A system for estimating direct-arrival energy in seismic data (907) acquired in a marine environment, comprising:
one or more processors (901); and
at least one memory (903) comprising at least one non-transitory computer-readable medium storing instructions (905) that, when executed by at least one of the one or more processors (901), cause the system to perform a method (800) according to any one of the claims 1 - 7.
